# EUROPÄISCHE PATENTANMELDUNG

(11) **EP 1 243 225 A2**
(43) Veröffentlichungstag der Anmeldung: **25.09.2002**
(21) Anmeldenummer: 02005341.9
(22) Anmeldetag: 14.03.2002
(51) Int. Cl.: A61C 1/00

(54) **Ventilanordnung bei einem medizinischen Gerät**

(30) Priorität: 23.03.2001 DE 10114330
(71) Anmelder: Ferton Holding SA, 2800 Delémont (CH)
(72) Erfinder: Lamas, Gustavo, 1213 Onex (CH); Beerstecher, Lutz, 1277 Borex (CH)
(74) Vertreter: Gauger, Hans-Peter, Dipl.-Ing.

(57) **Zusammenfassung**

Eine Ventilanordnung (1) ist zum Absperren des Durchflusses eines Fluids durch wenigstens eine flexible Schlauchleitung (2, 3, 4) mit einer Nockenwelle (7) ausgebildet, die wenigstens einen Schaltnocken in der Ausbildung einer Einfall-Ausnehmung (16) in einer sonst geschlossenen kreisrunden Wellenoberfläche der Nockenwelle für die gesteuerte Bewegung eines Druckkörpers (9, 10, 11), aufweist. Der Druckkörper ist zwischen einer vorgeschobenen aktiven Relativlage, in welcher ein zugeordneter Schlauchabschnitt für ein Absperren des Durchflusses des Fluids durch die Schlauchleitung zusammengequetscht wird, und einer zurückgezogenen inaktiven Relativlage beweglich ist, in welcher der Druckkörper für eine Freigabe des Fluid-Durchflusses durch den Schlauchabschnitt in die Ausnehmung eingefallen ist, während die aktive Relativlage des Druckkörpers mit der kreisrunden Wellenoberfläche der Nockenwelle erhalten wird.

## Beschreibung

Die Erfindung bezieht sich auf eine Ventilanordnung bei einem medizinischen Gerät zum Absperren des Durchflusses eines Fluids durch eine flexible Schlauchleitung gemäß der durch den Oberbegriff des Patentanspruches 1 angegebenen Art.

Aus der US-PS 4 960 259 ist eine Ventilanordnung zur Verwendung bei einem Infusionsgerät bekannt. In eine Stufenbohrung eines Ventilgehäuses ist ein Schlauchabschnitt eingesetzt, in welchen an dem größeren Durchmesser der Stufenbohrung eine Infusion-Kanüle durch den Schlauchabschnitt hindurch bis hin zu dem kleineren Durchmesser der Stufenbohrung vorschiebbar ist, an welchen eine Katheterröhre angeschlossen ist. Eine an dem Schlauchabschnitt vorgesehene Radialbohrung ist mit einem rohrförmigen Gehäuseansatz ausgebildet, der einen Druckkörper für eine Bewegung zwischen einer zurückgezogenen inaktiven Relativlage und einer vorgeschobenen aktiven Relativlage führt. In der aktiven Relativlage wird der Schlauchabschnitt bei zurückgezogener Infusion-Kanüle zusammengequetscht. Der Fluid-Durchfluss ist dann an dem Schlauchabschnitt gesperrt.

Aus der DE 690 07 003 T2 ist eine Ventilanordnung zur Verwendung bei einer linearen Peristaltikpumpe bekannt. Ein mit einem Fluidbehälter verbundener Infusionsschlauch wird dabei an einem durch ein Gehäuse hindurchgeführten Abschnitt durch hintereinander angeordnete Pumpfinger abwechselnd an einer ersten Position und an einer zweiten Position zusammengequetscht und wieder frei gegeben, um eine Verdrängung des in dem Schlauchabschnitt eingefangenen Fluids zu erhalten. Die Bewegung der Pumpfinger zur Erzielung einer damit bezweckten Förderung des Fluids durch den Infusionsschlauch hindurch wird durch Schaltkurven einer motorisch angetriebenen Nockenwelle gesteuert, die in einer zu dem Schlauchabschnitt parallel ausgerichteten Längsbohrung des Gehäuses drehbar gelagert ist. Die einzelnen Pumpfinger sind durch das Gehäuse für eine radiale Bewegung zwischen einer zurückgezogenen inaktiven Relativlage und einer vorgeschobenen aktiven Relativlage geführt, in welcher der Schlauchabschnitt an der einem Pumpfinger zugeordneten Position zusammengequetscht wird.

Der Erfindung liegt die Aufgabe zugrunde, eine Ventilanordnung der eingangs genannten Art so auszubilden, daß damit eine einfache Erweiterung einer Fluid-Durchflussregelung auch bei wenigstens einer zweiten Schlauchleitung möglich ist, die an ein gleiches oder auch an ein anderes medizinisches Gerät für die Zuleitung eines gleichen oder auch eines unterschiedlichen Fluids vorgesehen ist.

Diese Aufgabe wird erfindungsgemäß mit einer Ventilanordnung der durch den Patentanspruch 1 gekennzeichneten Ausbildung gelöst.

Durch die Ausrichtung des durch das Ventilgehäuse hindurchgeführten Schlauchabschnittes senkrecht zu der für die Lagerung der Nockenwelle vorgesehenen Längsbohrung ist eine wesentliche Voraussetzung dafür geschaffen, daß mit der gleichen Ventilanordnung auch eine Durchflussregelung für ein Fluid in wenigstens einer zweiten Schlauchleitung erreichbar ist. Diese Erweiterungsmöglichkeit des Anwendungsbereichs wird dadurch auf einfachste Weise erhalten, daß bei der erfindungsgemäßen Ventilanrodnung der oder jeder Schaltnocken mit einer für die Einnahme der zurückgezogenen inaktiven Relativlage des jeweils zugeordneten Druckkörpers vorgesehenen Einfall-Ausnehmung in einer sonst geschlossenen kreisrunden Wellenoberfläche der Nockenwelle ausgebildet ist, mit welcher bei der Drehung der Nockenwelle die vorgeschobene aktive Relativlage des oder jeden Druckkörpers erhalten wird.

Die erfindungsgemäße Ventilanordnung ergibt eine sehr einfach zu bauende Ausführungsform, die somit auch eine einfache Erweiterungsmöglichkeit für eine gemeinsame, einheitlich gesteuerte Durchflussregelung eines Fluids bei mehreren flexiblen Schlauchleitungen ergibt. In den einzelnen Patentansprüchen sind daher die Merkmale angegeben, welche solche zweckmäßigen und vorteilhaften Ausbildungen der erfindungsgemäßen Ventilanordnung ergeben.

Ein Ausführungsbeispiel der Ventilanordnung gemäß der vorliegenden Erfindung ist in der Zeichnung schematisch dargestellt und wird nachfolgend näher beschrieben. Es zeigt
- Fig. 1: eine Perspektivansicht der erfindungsgemäßen Ventilanordnung,
- Fig. 2: einen Längsschnitt der Ventilanordnung mit einer Schnittansicht nach der Linie A-A in Fig. 3 und
- Fig. 3: einen Querschnitt der Ventilanordnung mit einer Schnittansicht nach der Linie C-C in Fig. 2.

Die für das Ausführungsbeispiel in der Zeichnung dargestellte Ventilanordnung ist für ein Dentalgerät vorgesehen, bei welchem ein für eine Zahnbehandlung angeschlossenes Handstück wahlweise aus zwei Fluidbehältern über zwei Schlauchleitungen mit zwei unterschiedlichen Fluids versorgt werden kann sowie außerdem auch mit Frischwasser, das über eine dritte Schlauchleitung dem Handstück zugeleitet wird. Die wahlweise Zuleitung der beiden Fluids soll dabei durch die Ventilanordnung mit einer dann eingeschalteten Saugpumpe vermittelt werden. Die Saugpumpe soll aber ausgeschaltet sein, wenn über die dritte Schlauchleitung die Zuleitung von Frischwasser an das Handstück vorgenommen wird.

Die in ihrer Gesamtheit mit der Bezugsziffer 1 bezeichnete Ventilanordnung ist gemäß dem vorbeschriebenen Konzept für eine Durchflußregelung von Fluids bestimmt, die in drei flexiblen Schlauchleitungen 2, 3 und 4 dem Handstück des Dentalgerätes wahlweise zugeleitet werden. Jede dieser Schlauchleitungen ist durch ein Gehäuse 5 der Ventilanordnung mit einem Schlauchabschnitt hindurchgeführt, dessen Länge durch die Baubreite der Ventilanordnung festgelegt ist.

Das Ventilgehäuse 5 ist mit einer als eine Stufenbohrung ausgeführten Längsbohrung 6 ausgeführt, die zur Aufnahme einer in dieser Bohrung drehbar gelagerten Nockenwelle 7 vorgesehen ist. Die Nockenwelle 7 weist eine geschlossene kreisrunde Wellenoberfläche 7' auf, in welcher an den Orten längs ihrer Längsachse, wo die Schlauchabschnitte der Schlauchleitungen 2, 3 und 4 nebeneinander durch das Gehäuse 5 hindurchgeführt sind, Ausnehmungen wie bsp. die Ausnehmung 8 ausgebildet sind, in welche an diesen Orten vorgesehene Druckkörper 9, 10 und 11 einfallen können. Die Einfall-Ausnehmungen sind an der Nockenwelle 7 mit einem axialen gegenseitigen Abstand angeordnet, der dem gegenseitigen Abstand der durch das Gehäuse 5 hindurchgeführten Schlauchabschnitte der Schlauchleitungen 2, 3 und 4 entspricht. Dieser gegenseitige Abstand ist mit dem gegenseitigen Abstand von Radialbohrungen 12, 13 und 14 vorgegeben, die als Radialführungen für die Druckkörper vorgesehen sind und über welche die Längsbohrung 6 des Gehäuses 5 eine offene Verbindung mit einem Freiraum 15 erhält, durch welchen die Schlauchleitungen 2, 3 und 4 hindurchgeführt sind.

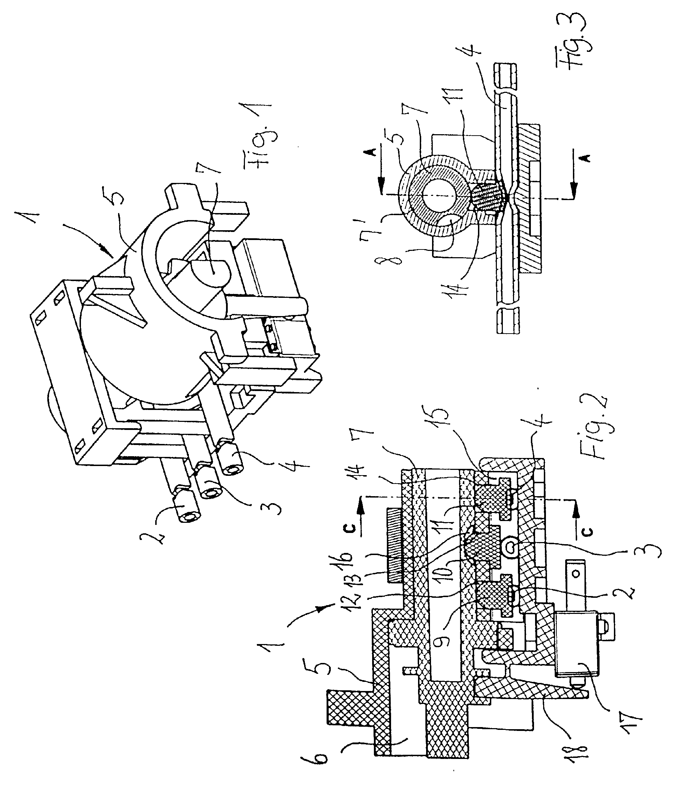

Die einzelnen Einfall-Ausnehmungen für die Druckkörper 9, 10 und 11 sind andererseits in der Umfangsrichtung der sonst geschlossenen kreisrunden Wellenoberfläche 7' mit einem wechselseitig abweichenden Mittelpunktswinkel versetzt zueinander angeordnet, sodaß mit den verschiedenen Einfall-Ausnehmungen verschiedene Bewegungsabläufe für die einzelnen Druckkörper erhalten werden. Aus den Fig. 2 und 3 ist so bsp. ableitbar, daß der Druckkörper 11 am Ort der Schlauchleitung 4 an der geschlossenen kreisrunden Wellenoberfläche 7' der Nockenwelle 7 anliegt und dadurch in eine vorgeschobene aktive Relativlage gedrückt wird, in welcher der betreffende Schlauchabschnitt für ein Absperren des Fluid-Durchflusses zusammegequetscht wird. In Fig. 2 ist andererseits gezeigt, daß hier der Druckkörper 10 in eine ihm zugeordnete Einfall-Ausnehmung 16 eingefallen ist und er damit eine zurückgezogene inaktive Relativlage einnimmt, in welcher der zugeordnete Schlauchabschnitt durch den Druckkörper 10 nicht zusammengequetscht wird und daher der Durchfluss eines Fluids durch die mittlere Schlauchleitung 3 möglich ist. Der Druckkörper 9 an der Schlauchleitung 2 ist wieder durch die geschlossene Wellenoberfläche der Nockenwelle 3 in eine vorgeschobene aktive Relativlage gebracht, sodaß bei der Schlauchleitung 2 ebenso wie bei der Schlauchleitung 4 ein zusammengequetschter Schlauchabschnitt vorliegt, mit welchem der Durchfluss eines Fluids durch die Schlauchleitung 2 abgesperrt wird.

Durch ein Drehen der Nockenwelle 7 kann bsp. die Einfall-Ausnehmung 8 eine Anordnung über dem Druckkörper 11 erfahren, sodaß dann der Druckkörper 11 in dieser gedrehten Relativlage der Nockenwelle 7 in die Einfall-Ausnehmung 8 einfallen kann. Das Einfallen wird dabei unterstützt durch eine Druckentlastung des zusammengequetschten Schlauchabschnittes unter dem Leitungsdruck des dann in der Schlauchleitung 4 nicht mehr abgesperrten Fluids. Gleichzeitig sind dann die beiden anderen Einfall-Ausnehmungen an der Nockenwelle 7 in winkelmäßige Relativlagen gebracht, in denen dann neben der durch den Druckkörper 9 fortgesetzt abgesperrt verbleibenden Schlauchleitung 2 jetzt auch die Schlauchleitung 3 durch den Druckkörper 10 an dem betreffenden Schlauchabschnitt zusammengequetscht ist und daher auch bei dieser Schlauchleitung ein Durchfluss des Fluids abgesperrt ist.
Die Drehung der Nockenwelle 7 kann manuell an einem Drehgriff erfolgen oder es kann dafür alternativ auch ein elektrischer Schrittschaltmotor vorgesehen werden. Weiterhin kann an dem Gehäuse 1 ein Mikroschalter 17 angeordnet sein, der zum Ein- und Ausschalten einer für die Fluidförderung verwendeten Saugpumpe vorgesehen ist. Dieser Mikroschalter ist für ein Ausschalten der Saugpumpe mittels eines ebenfalls an dem Gehäuse 5 angeordneten Schalthebels 18 betätigbar. Die Saugpumpe ist dabei zweckmäßig mit ihrer Saugleitung an eine stromabwärts von der Ventilanordnung zusammengeführte, wenigstens zwei Schlauchleitungen gemeinsame Verbindungsleitung angeschlossen und über ihre Druckleitung mit dem Handstück des Dentalgerätes verbunden.

Für die Nockenwelle kann eine Drehbarkeit in eine neutrale Schaltposition vorgesehen werden, in welcher sich alle drei Druckkörper in der vorgeschobenen aktiven Relativlage befinden, sodaß dann alle drei Schlauchleitungen für den Durchfluss eines Fluids abgesperrt sind. Alternativ kann diese neutrale Schaltposition auch nur für eine Auswahl unter den einzelnen Druckkörpern vorbestimmt sein. Daneben kann auch noch eine weitere neutrale Schaltposition für die Nockenwelle vorgemerkt werden, in welcher der Mikroschalter für ein Ausschalten der Saugpumpe betätigt ist, solange über eine der drei Schlauchleitungen anstelle eines in den Fluidbehältern für eine Zahnbehandlung enthaltenen Fluids über eine angeschlossene Versorgungsleitung Frischwasser an das Handstück des Dentalgerätes zugeleitet wird.

Durch das Vorsehen von einzelnen Einfall-Ausnehmungen, die auch für eine Mengenregelung benutzt werden können, an einer sonst geschlossenen kreisrunden Wellenoberfläche der Nockenwelle werden Schaltnocken für einzelne Druckkörper erhalten, die eine beliebige Vervielfachung von Schaltfunktionen erlauben. Es sind dafür lediglich die Baugröße der Ventilanordnung und die individuelle Ausbildung der einzelnen Schaltnocken entsprechend anzupassen. Für die Schaltnocken können auch andere Ausbildungen vorgesehen werden. Die Druckkörper, deren Formgebung frei wählbar ist, können auch durch Druckfedern in ihre inaktive Relativlage vorgespannt sein.

## Patentansprüche

1. Ventilanordnung bei einem medizinischen Gerät zum Absperren des Durchflusses eines Fluids durch eine flexible Schlauchleitung,
- mit einem Gehäuse (5), durch welches ein Abschnitt der Schlauchleitung (2, 3, 4) hindurchgeführt ist,
- mit einer in einer Längsbohrung (6) des Gehäuses (5) drehbar gelagerten Nockenwelle (7), die wenigstens einen Schaltnocken (8, 16) zum Bewegen und Führen wenigstens eines Druckkörpers (9, 10, 11) in einer zu der Längsbohrung radial ausgerichteten Radialbohrung (12, 13, 14) des Gehäuses aus einer zurückgezogenen inaktiven Relativlage in eine vorgeschobene aktive Relativlage aufweist, in welcher der Schlauchabschnitt durch den wenigstens einen Druckkörper für ein Absperren des Fluid-Durchflusses durch die Schlauchleitung hindurch zusammengequetscht wird,
dadruch gekennzeichnet, daß
- der Schlauchabschnitt in einer Richtung durch das Gehäuse hindurchgeführt ist, die senkrecht zu der für die Lagerung der Nockenwelle (7) vorgesehenen Längsbohrung (6) des Gehäuses (5) und senkrecht zu der den wenigstens einen Druckkörper (9, 10, 11) führenden Radialbohrung (12, 13, 14),
- der wenigstens eine Schaltnocken mit einer Einfall-Ausnehmung (8, 16) in einer sonst geschlossenen kreisrunden Wellenoberfläche (7') der Nockenwelle (7) ausgebildet ist, wobei mit der Einfall-Ausnehmung die zurückgezogene inaktive Relativlage des wenigstens einen Druckkörpers (9, 10, 11) erhalten wird, dessen vorgeschobene aktive Relativlage mit einer Drehung der Nokkenwelle durch deren sonst geschlossene kreisrunde Wellenoberfläche erreicht wird.

2. Ventilanordnung nach Anspruch 1, **dadurch gekennzeichnet, daß** die Nockenwelle (7) wenigstens einen zweiten Schaltnocken für einen in einer zweiten Radialbohrung (13) des Gehäuses (5) beweglich geführten zweiten Druckkörper (10) an einem durch das Gehäuse hindurchgeführten Abschnitt wenigstens einer zweiten flexiblen Schlauchleitung (3) aufweist, wobei der wenigstens zweite Schaltnocken mit wenigstens einer zweiten Einfall-Ausnehmung (16) der Nokkenwelle ausgebildet ist, die zu der einen Einfall-Ausnehmung (8) axial beabstandet und in der Umfangsrichtung der sonst geschlossenen kreisrunden Wellenoberfläche (7') der Nockenwelle mit einem abweichenden Mittelpunktswinkel versetzt angeordnet ist.

3. Ventilanordnung nach Anspruch 2, **dadurch gekennzeichnet, daß** durch die beiden axial und in Umfangsrichtung versetzt zueinander angeordneten Einfall-Ausnehmungen (8, 16) der sonst geschlossenen kreisrunden Wellenoberfläche (7') der Nockenwelle (7) die unterschiedlichen Zeitpunkte festgelegt sind, zu welchen in zwei korrespondierenden unterschiedlichen Drehlagen der Nockenwelle die beiden flexiblen Schlauchleitungen (2, 3) für ein abwechselndes Absperren des Fluids-Durchflusses durch die in ihre aktive Relativlage vorgeschobenen Druckkörper (9, 10) an den durch das Gehäuse (5) hindurchgeführten Schlauchabschnitten zusammengequetscht werden.

4. Ventilanordnung nach Anspruch 2 oder 3, **dadurch gekennzeichnet, daß** die beiden Schlauchleitungen (2, 3) stromabwärts von der Ventilanordnung an eine gemeinsame weiterführende Verbindungsleitung angeschlossen sind, über welche die in den beiden Schlauchleitungen herangeführten Fluids für eine wahlweise Verwendung bei dem medizinischen Gerät weitergeleitet werden.

5. Ventilanordnung nach einem der Ansprüche 1 bis 4, **dadurch gekennzeichnet, daß** die Nockenwelle (7) in eine erste neutrale Schaltposition drehbar ist, in welcher sich der wenigstens eine oder jeder Druckkörper (9, 10, 11) in seiner vorgeschobenen aktiven Relativlage befindet.

6. Ventilanordnung nach einem der Ansprüche 1 bis 5, **dadurch gekennzeichnet, daß** die Nockenwelle (7) in eine zweite neutrale Schaltposition drehbar ist, in welcher über einen mit der Nockenwelle gekoppelten Schalthebel (18) ein Mikroschalter (17) betätigbar ist, der zum Ein- und Ausschalten einer für eine Fluidförderung verwendeten Pumpe vorgesehen ist.

7. Ventilanordnung nach einem der Ansprüche 1 bis 6, **dadurch gekennzeichnet, daß** die Nockenwelle (7) durch einen Drehgriff manuell drehbar ist, der an dem die Ventilanordnung aufnehmenden medizinischen Gerät vorgesehen ist.

8. Ventilanordnung nach einem der Ansprüche 1 bis 7, **dadurch gekennzeichnet, daß** die Nockenwelle (7) durch einen elektrischen Schrittschaltmotor drehbar ist.

9. Ventilanordnung nach einem der Ansprüche 1 bis 8, **dadurch gekennzeichnet, daß** mit wenigstens einem weiteren Schaltnocken der Nockenwelle (7) eine Mengenregelung an dem zugeordneten Schlauchabschnitt einer Schlauchleitung vorgenommen wird.

10. Ventilanordnung nach Anspruch 9, **dadurch gekennzeichnet, daß** bei dem für eine Mengenregelung vorgesehenen Schaltnocken die betreffende Einfall-Ausnehmung tiefer ausgeführt ist als bei einer ein Absperren des Fluid-Durchlasses durch die Schlauchleitung steuernden Einfall-Ausnehmung.
